# EUROPEAN PATENT APPLICATION

(11) **EP 1 658 949 A1**
(43) Date of publication of application: **24.05.2006**
(21) Application number: 04772255.8
(22) Date of filing: 26.08.2004
(51) Int. Cl.: B29C 45/78, B29C 45/74

(54) **INJECTION MOLDING MACHINE, AND TEMPERATURE CONTROL METHOD FOR INJECTION MOLDING MACHINE**

(30) Priority: 27.08.2003 JP 2003303275
(71) Applicant: SUMITOMO HEAVY INDUSTRIES, LTD., Shinagawa-ku, Tokyo 141-8686 (JP)
(72) Inventor: Onishi, Masashi, Sumitomo Heavy Industries, Ltd., Chiba-shi, Chiba 2630001 (JP)
(74) Representative: Emde, Eric
(86) International application number: PCT/JP2004/012299
(87) International publication number: WO 2005/021237

(57) **Abstract**

In an injection molding machine, a plurality of temperature sensors for detecting temperatures are provided at a plurality of positions of a heating-cylinder provided with a heater. A control device controls an input to the heater by selectively using temperature detection values output from the temperature sensors. Therefore, a temperature distribution of the heating-cylinder can be set and changed with high accuracy.

## Description

### TECHNICAL FIELD

The present invention relates to injection molding machines and, more particularly, to an injection machine equipped with a heating/cooling device that controls a temperature of a cylinder that injects a resin by heating and melting.

### BACKGROUND ART

In a conventional injection molding machine, it is general to constitute a heating-cylinder by providing a heater around a cylinder having a nozzle and connect the heating-cylinder to a material supply part such as a hopper. Usually, a material such as a plastic is supplied from the material supply part to the heating-cylinder and is injected from a nozzle by a screw that moves within the cylinder after being melted within the heating-cylinder. The material supply part side of the heating-cylinder may be cooled by a water-cooling type cooling device, etc., so that the resin is not melted in this portion.

In the injection molding machine having the above-mentioned structure, the heating-cylinder has a temperature distribution in the longitudinal direction of the heating-cylinder.

Here, in mold products formed by injection molding machines, an extremely high dimensional accuracy is required for optical discs such as, for example, a CD or a DVD. It is required for an injection molding machine, which forms a mold product with a high dimensional accuracy, to control a temperature distribution in the longitudinal direction of a heating-cylinder with a high accuracy.

Conventionally, there is one, as an injection molding machine which controls a temperature distribution in a longitudinal direction of a heating-cylinder, in which the heating-cylinder is sectioned into a plurality of zones and a single temperature sensor constituted by a thermocouple is located in each zone so as to measure and detect a temperature in each zone. In the injection molding machine having this structure, it is possible to perform injection molding with a high accuracy by temperature-controlling a heater of each zone individually.

However, it is a situation that the demand for the high dimensional accuracy of mold products in recent years cannot be sufficiently coped with. That is, in having performed temperature detection by a thermocouple at only one point in each heating zone, there are many cases where the demand for a high dimensional accuracy cannot be fulfilled.

Moreover, although it is necessary to change a temperature slope of a heating-cylinder in order to acquire an optimum temperature condition of a resin within the heating-cylinder, a temperature setting of each zone must be changed so as to change the temperature slope. However, according to the conventional temperature control, only the temperature setting of each zone is changeable, and there is a limit in the temperature slope that can be set. It is considered to change the temperature slope by changing the position of the temperature sensor, but it is necessary to make another hole in the heater and the cylinder of the heating-cylinder so as to change the position of the thermocouple constituting the temperature sensor, which requires a lot of labor.

Japanese Laid-Open Patent Application No. 5 - 237892 (patent document 1) discloses a temperature control method and apparatus that can reduce a thermal influence between zones adjacent to each other by arranging a plurality of band-type heaters on a cylinder with an interval therebetween and providing temperature sensors in front and behind each heater.

In the conventional injection molding machine, an importance is given to the detection of the temperature in a plane of the cylinder constituting the heating-cylinder, and necessity of detecting a temperature of the heater attached to the cylinder is not pointed out.

Furthermore, in the technique disclosed in the Patent Document 1, consideration is given to only a thermal influence in a longitudinal direction of a heating-cylinder. Thus, temperatures of the heating-cylinder at portions on both sides of each heater are detected and a temperature control of each heater is performed based on an average value of both temperatures. That is, the Patent Document 1 merely discloses detection of temperatures in the longitudinal direction of the cylinder constituting the heating-cylinder, and discloses nothing about a technique which can change a temperature distribution in the cylinder.

Thus, it is an object of the present invention to provide an injection molding machine which can set and change a temperature distribution of a heating-cylinder with a high accuracy. It is another object of the present invention to provide an injection machine which detects temperatures in the vicinity of an inner wall of a cylinder constituting a heating-cylinder and in the vicinity of a heater to acquire a temperature distribution and control the temperatures with a high accuracy based on the acquired temperature distribution.

### MEANS FOR SOLVING PROBLEMS

In order to achieve the above-mentioned objects, there is provided according to one aspect of the present invention an injection molding machine comprising: a cylinder provided with a heater; a plurality of temperature sensors provided at a plurality of positions of the cylinder to detect temperatures at the plurality of positions of said cylinder; and a control device that controls an input to said heater by selectively using temperature detection values output from the temperature sensors.

In the injection molding machine according to the above-mentioned present invention, it is preferable that the plurality of positions include tow or more different positions along a longitudinal direction of said cylinder. Additionally, it is preferable that the plurality of positions include two or more different positions inside a wall surface of the cylinder along a radial direction of the cylinder inside a wall surface of the cylinder. In this case, the plurality of temperature sensors may include a first temperature sensors provided at a position adjacent to an inner surface of the cylinder, and a second temperature sensor provided at a position closer to the heater than the first temperature sensor.

Additionally, in the injection molding machine according to the present invention, the cylinder may be sectioned into a plurality of zones along the longitudinal direction, and the plurality of temperature sensors may be provided to each of the plurality of zones. Further, the injection molding machine according to the present invention may comprises a display/input device that displays temperature detection values of the plurality of temperature sensors and inputs temperatures to be set to each zone.

Additionally, there is provided according to another aspect of the present invention a temperature control method of an injection molding machine having a cylinder extending in a longitudinal direction and a heater provided to surround a periphery of the cylinder, comprising: detecting temperatures of a plurality of positions of the cylinder; selecting a temperature detection value used for controlling a temperature of said cylinder from temperature detection values detected at the plurality of positions; and controlling the temperature of said cylinder by using the selected temperature detection value.

In the temperature control method of an injection molding machine according to the present invention, it is preferable that the plurality of positions include tow or more different positions along a longitudinal direction of said cylinder. Additionally, it is preferable that the plurality of positions include two or more different positions inside a wall surface of the cylinder along a radial direction of the cylinder.

### EFFECT OF THE INVENTION

According to the present invention, a desired temperature slope with respect to a melting temperature of a resin can be easily acquired without changing the setting temperatures or changing the attaching positions of the temperature sensors. As a result, further a problem generated in a plasticization process, such as catch defect and deaeration defect, burn, color change, etc., can be solved.

### BRIEF DESCRIPTION OF DRAWINGS

FIG. 1 is a side view showing an entire structure of an electric injection molding machine as an example of an injection molding machine to which the present invention is applied.
FIG. 2 is a cross-sectional view of an injection apparatus shown in FIG. 1.
FIG. 3 is a diagram showing an outline structure of a temperature control device according to an embodiment of the present invention.
FIG. 4 is a cross-sectional view of a heating-cylinder.
FIG. 5 is a block diagram showing a controller shown in FIG. 3.

### EXPLANATION OF REFERENCE NUMERALS

50 injection apparatus
51 heating-cylinder
53 screw
105 injection nozzle
h1, h2, h3, h4 heater
21-24 zone
30 controller
35 display input device
A-1 to K-1, A-2 to K-2 temperature sensor
28 first switch part
28-1 to 28-4 first switch
41-1 to 41-4 PID controller
42-1 to 42-4 PID operation part
301 temperature control part
301-1 to 301-4 temperature control unit
302-1 to 302-4 second switch
303 power supply

### BEST MODE FOR CARRYING OUT THE INVENTION

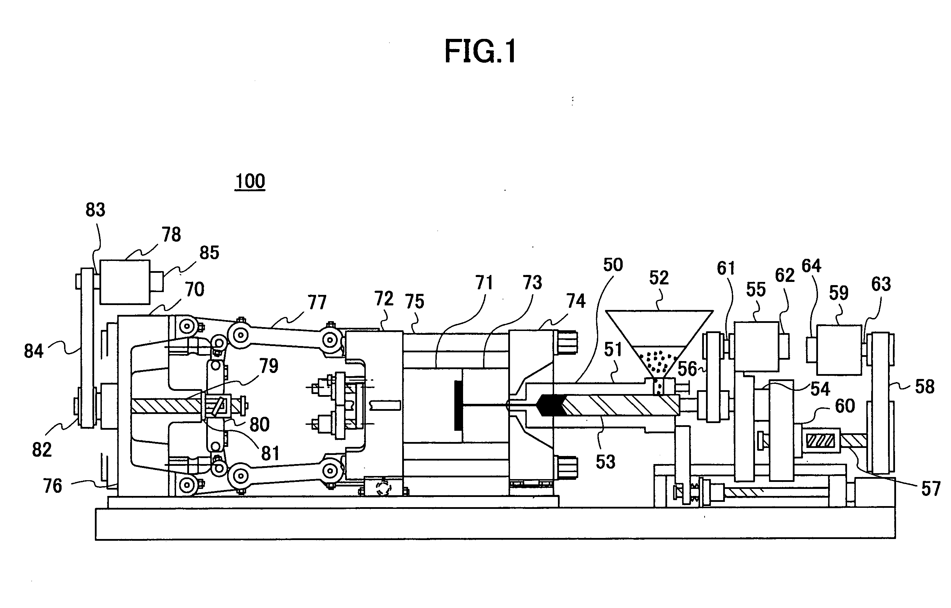

First, an example of an injection molding machine to which the present invention is applied is explained with reference to FIG. 1. FIG. 1 is a side view showing an entire structure of an electric injection molding machine as an example of an injection molding machine to which the present invention is applied.

The electric injection molding machine 100 shown in FIG. 1 comprises an injection apparatus 50 and a mold-clamping apparatus 70.

The injection apparatus 50 is equipped with a heating-cylinder, and the heating-cylinder 51 is provided with a hopper 52. A screw 53 is provided rotatably and movably forward and rearward in the heating-cylinder. A rear end of the screw 53 is rotatably supported by a support member 54. A metering motor 55 such as a servomotor, etc., is attached to the support member 54 as a drive part. The rotation of the metering motor 55 is transmitted to the screw 53 of a driven part through a timing belt 56 attached to an output axis 61. A rotation detector 62 is connected to a rear end of the output axis 61. The rotation detector 62 detects a rotation speed of the screw 53 by detecting a number of rotations or an amount of rotations of the metering motor 55.

The injection apparatus 50 has a screw axis 57 parallel to the screw 53. A rear end of the screw axis 57 is connected to an injection motor 59 such as a servomotor through a timing belt 58 attached to an output axis 63 of the injection motor 59. Therefore, the screw axis 57 can be rotated by the injection motor 59. A front end of the screw axis 57 is engaged with a nut 60 fixed to the support member 54. When rotating the screw axis 57 through the timing belt 58, the support member 54 is movable forward and rearward, and, as a result, the screw 53 of the driven part can be moved forward and rearward. A rear end of the output axis 63 of the injection motor 59 is connected with a position detector 64. The position detector 64 detects a number of rotations or an amount of rotations of the injection motor 59 so as to detect the position of the screw 53, which indicates a drive state of the screw 53.

The mold-clamping apparatus 70 has a movable platen 72 to which a movable mold 71 is attached, and a stationary platen 74 to which a stationary mold 73 is attached. The movable platen 72 and the stationary platen 74 are connected by tie bars 75. The movable platen 72 is slidable along the tie bars 75. Additionally, the mold-clamping apparatus 70 has a toggle mechanism 77 having one end connected to the movable platen 72 and the other end connected to a toggle support 76. A ball screw shaft 79 is rotatably supported at the central part of the toggle support 76. The ball screw shaft 79 is engaged with a nut 81 formed in a crosshead 80 provided in the toggle mechanism 77. Additionally, a pulley 82 is provided to a rear end of the ball screw shaft 79, and a timing belt is provided between an output axis 83 of a mold-clamping motor 78 such as a servomotor and the pulley 82.

In the mold-clamping apparatus 70, when driving the mold-clamping motor 78, which is the drive part, the rotation of the mold-clamping motor 78 is transmitted to the ball screw shaft 79 through the timing belt 84. Then, it is converted from a rotational motion to a linear motion by the ball screw shaft 79 and the nut 81, and the toggle mechanism is operated. According to the operation of the toggle mechanism 77, the movable platen 72 moves along the tie bars 75, and mold-closing, mold-clamping and mold-opening are performed. A position detector 85 is connected to a rear end of the output axis 83 of the mold-clamping motor 78. The position detector 85 detects a position of the crosshead 80, which moves with the rotation of the ball screw shaft 79, or the movable platen 72 connected to the crosshead 80 through the toggle mechanism 77 by detecting a number of rotations or an amount of rotations of the mold-clamping motor 78.

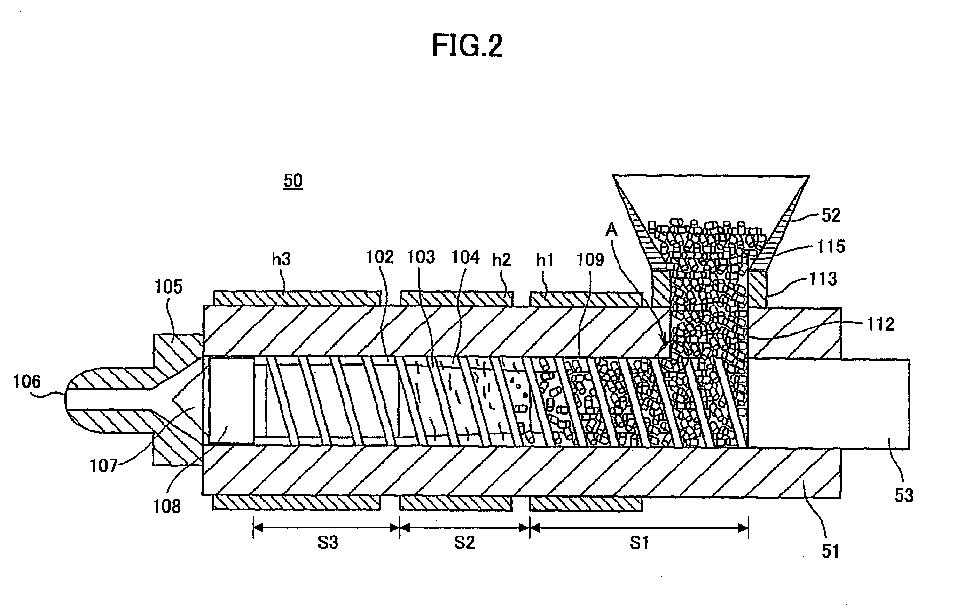

Next, a description will be given, with reference to FIG. 2, of a structure of the injection apparatus 50, which is a relevant part of the present invention. FIG. 2 is a cross-sectional view of the injection apparatus 50.

As mentioned above, the injection apparatus 50 has the heating-cylinder 51 and the screw 53, which is rotatable and movable forward and rearward within the heating-cylinder 51. An injection nozzle 106 formed with a nozzle opening 106 is provided on an end of the heating-cylinder 51. A resin supply port 112 is formed at a predetermined position of the heating-cylinder 51. The hopper 52 is connected to the resin supply port 112 through a connection cylinder 113, and resin pellets 115 are supplied to inside of the heating-cylinder 51 by being passed through the connection cylinder 113 and the resin supply port 112. Additionally, plane-like band heaters h1, h2 and h3 are attached to the outer circumference of the heating-cylinder 51. The resin pellets 115 can be heated and melted within the heating-cylinder 51 by supplying an electric current to the band heaters h1, h2 and h3.

The screw 53 has a flight part 102, a screw head 107 provided on a front end of the flight part 102, and a seal part 108. The flight part 102 has a flight 103 spirally formed on an outer circumferential surface of the body of the screw 53, and a spiral groove 104 is formed by the flight 103. Additionally, formed in the flight part 102 are, sequentially from a rear side to a front side, a feed zone S1 in which the resin pellets 115 fallen from the hopper 52 are fed forward, a compression zone S2 in which the supplied pellets 115 are melted while being compressed, and a metering zone S3 in which the melted resin is metered by a constant amount.

When the screw 53 is rotated in the normal direction at the time of the metering process, the resin pellets 115 are fed from the resin supply port 112 to the zone S1, and are moved forward (moved leftward in the figure) within the groove 104. With such, the screw 53 is moved rearward (moved rightward in the figure) and the resin is stored in front of the screw head 107. It should be noted that the form of the pellets is kept in the feed zone S1, and is set to a half-melted state in the compression zone S2 and completely melted in a liquid form in the metering zone S3. Then, when the screw 53 is moved forward at the time of the injection process, the liquefied resin stored in front of the screw head 107 is injected from the injection nozzle 105, and is filled in a cavity space of the stationary mold 73 of the mold-clamping apparatus 70.

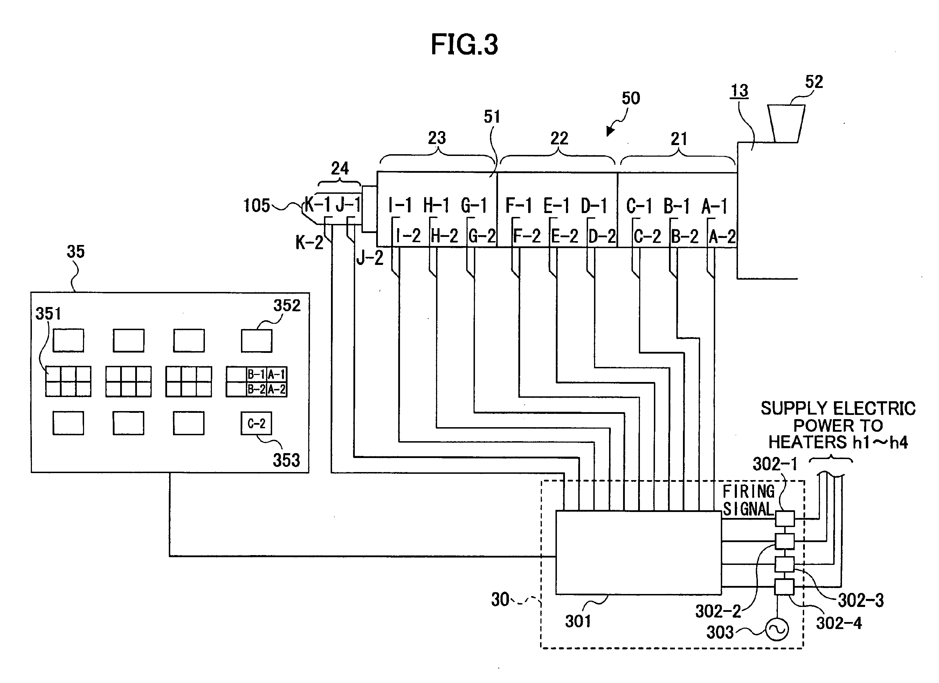

Next, a description will be given, with reference to FIG. 3, of an embodiment of the present invention. FIG. 3 is a diagram showing a structure of a temperature control device of an injection molding machine according to an embodiment of the present invention. The temperature control device is a device for controlling a temperature of the above-mentioned heating-cylinder 51.

As shown in FIG. 3, the heating-cylinder 51 and the injection nozzle 105 are sectioned into the four zones along the longitudinal direction from the cooling cylinder 13 to the injection nozzle 105. Here, the four zones are referred to as a first zone 21, a second zone 22, a third zone 23 and a fourth zone 24, in that order from the zone adjacent to the cooling cylinder 13. Accordingly, the nozzle 105 forms the fourth zone 24. It should be noted that the water-cooling cylinder 13 is a cylinder provided for cooling the hopper 52 and the vicinity thereof and is provided for maintaining the periphery of the hopper 52 at a temperature equal to or lower than a fixed temperature. Additionally, although not shown in the figure, a heater is also provided around the nozzle 105 so as to heat the nozzle 105. This heater is referred to as a heater h4.

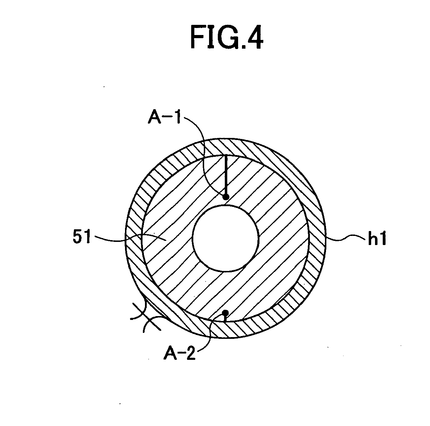

As shown in FIG. 4, in the first through third zones 21 through 23, the band heaters h1, h2, and h3, which are supplied with electric power, are arranged on an outer circumference of the heating-cylinder 51. Additionally, in the example shown in FIG. 3, three sets of temperature sensors A-1, A-2; B-1, B-2; C-1, C-2 are arranged in longitudinal direction in the first zone 21. Similarly, three sets of temperature sensors D-1, D-2; E-1, E-2; F-1, F-2 are arranged in the second zone 22, and three sets of temperature sensors G-1, G-2; H-1, H-2; I-1, I-2 are arranged also in the third zone 23. Furthermore, two sets of temperature sensors J-1, J-2; K-1, K-2 are provided in the fourth zone 24.

Since the positions of each set of the temperature sensors with respect to the heating-cylinder 51 and the nozzle 105 are the same, a description will be given of the temperature sensors shown in FIG. 4 as an example. The temperature sensor A-1 is embedded in a hole having a depth equal to or greater than one half of a wall thickness of the heating-cylinder 51 from the outer circumferential surface thereof, preferably reaching close to the inner surface of the heating-cylinder 51 so as to detect the temperature of the inner surface of the heating-cylinder 51. The temperature sensor A-2 is embedded at a position close to the heater h1, preferably a position close to the outer circumferential surface of the heating-cylinder 51 so as to detect the temperature of the heater h1. The temperature sensors A-1 and A-2 are provided at positions different from each other in a radial direction in the same cross-sectional plane of the heating-cylinder 51, and, in the example shown in FIG. 4, the temperature sensors A-1 and A-2 are provided at opposite positions in a radial direction, that is, positions separated by 180 degrees.

As mentioned above, in the present embodiment, the plurality of temperature sensors are provided even in the zone according to the same heater along the longitudinal direction of the injection nozzle 105 and the heating-cylinder, and the plurality of temperature sensors and provided at different depths in the same cross-sectional plane.

As shown in FIG. 3, the temperature sensors (for example, A-1, A-2) of each set of temperature sensors are connected to a controller 30 provided with first switches mentioned later which select one of the temperature sensors. The controller 30 comprises: a temperature control part 301 which are given measurement values from each temperature sensors as input signals and performs an operation based on the measurement values to output switching signals according to a result of the operation; second switches 302-1 to 302-4 that turn on and off according to the switching signals; and a power supply 303 which supplies electric current to the heaters h1, h2, h3 and h4 provided in the first through fourth zones 21-24 through the second switches 302-1 to 302-4.

The temperature control part 301 displays the measurement values from the temperature sensors and is connected to a display input device 35 that inputs the temperature setting values and gives them to the temperature control part 301. The display input device 35 is preferably a display device, which displays a display setting screen such as shown in the figure. Displayed on the display setting screen shown in the figure are: a temperature detection value display part 351 which displays the measurement values from the temperature sensor in each zone, that is, displays the temperature detection values on an individual zone basis; a temperature setting part 352 which sets the temperatures in each zone as setting values; and a control sensor selecting part 353 which selects a temperature sensor in each zone.

All of the detected temperatures of the temperature sensors are displayed on the display setting screen, and the display input device 35 is provided with switches which can select the temperature sensors to be used from among the plurality of temperature sensors provided in the same zone to perform the temperature control of each zone of the nozzle 105 and the heating-cylinder 51.

On the other hand, the temperature control part 301 perform a control operation based on a difference between the detection temperatures of the temperature sensors selected by the display input device 35 and the set temperatures, and outputs a result of the operation as switching signals to the second switches 302-1 to 302-4 provided in response to the heaters of each zone. That is, the switching signals from the temperature control part 301 are signals determining on-periods of the second switches 302-1 to 302-4, and control on-duties indicting ratios of time periods during which the second switches 302-1 to 302-4 are turned on. As a result, the time period of supplying an electric current in each zone is controlled, and the temperatures at the positions of the nozzle 105 and the heating-cylinder 51 where the selected temperature sensors are located can be maintained constant.

Next, an explanation will be given of the reason for arranging the two temperature sensors at different positions from each other in a radial direction as shown in FIG. 4. The temperature of the heating-cylinder 51 is not uniform in a radial direction as well as in a longitudinal direction, and there is a temperature distribution. This is for the reason that the temperature of the melted resin inside the heating-cylinder 51 and the temperatures of the outer circumference of the heating-cylinder 51 in contact with the heaters h1, h2 and h3 are different.

Furthermore, the temperature controlled for each zone 21 to 24 are the temperatures at positions where the temperature sensors detect temperatures, and the temperatures at each positions change in the longitudinal direction of the heating-cylinder 51 as mentioned above. For example, giving an explanation about the temperatures in the sensors A-1 and A-2 at positions closest to the water-cooling cylinder 13, the temperature is lower at positions close to the water-cooling cylinder 13 in the longitudinal direction, the temperature is lower as closer to the inner diameter in a radial direction. Accordingly, the on-duty of the heater varies according to which position is selected for the temperature control, which results in a change in an amount of heat given to the heating-cylinder 51. For example, if the temperature control is performed using the temperature sensor A-1 provided on the inner side of the heating-cylinder 51, the on-duty of the heater A-1 goes higher so as to compensate for an amount of heat absorbed by the water-cooling cylinder from the temperature measuring point. As a result, the temperature slope becomes steep since an amount of heat given to the heating-cylinder 51 as a whole zone is larger than when performing the temperature control using the temperature sensor C-1 provided at the same position in the radial direction and farthest from the water-cooling cylinder 13 in the zone 21

Contrary, the temperature slope becomes gentle when performing the temperature control using the temperature sensor C-1 provided at the same position in the radial direction and farthest from the water-cooling cylinder 13 in the zone 21. By using such a characteristic, problems caused by plasticization, such as catch defect, deaeration defect, burn, color change, etc., can be easily solved.

Here, a description will be given of the effect when the plurality of temperature sensors (two pieces in the figure) are arranged at positions different in a radial direction as shown in FIG. 4.

Arranging the temperature sensors in a radial direction such as mentioned above is effective especially in the compression zone S2 (refer to FIG. 2). The compression zone S2 shown in FIG. 2 is an area substantially corresponding to the zone 22 in FIG. 3. In the compression zone S2, the resin pellets 115 fed from the feed zone S1 are melted by a heat applied to the heating-cylinder 51 and a heat generated when sharing the resin by the screw 53. Here, the sharing heat is generated more as the rotation of the screw is faster and the back-pressure is higher. If the sharing heat is too much, a molding defect such as burn or color change of the resin is caused. On the other hand, if the heat from the heating-cylinder 51 (heat from the heater) is insufficient, the resin pellets 115 cannot be melted to a moderate degree.

Thus, in the compression zone S2, the temperatures of the positions different in a radial direction are detected so as to determine whether a heat is moving in a direction toward the inner side or toward the outer side in the wall of the heating-cylinder 51. When a heat moves toward the inner side in the wall of the heating-cylinder 51, it can be determined that it is a state where the heat is moved from the heater to the resin through the heating-cylinder 51. On the other hand, when the inner side temperature is high and there is too much temperature difference, it can be determined that there is a possibility of occurrence of burn or color change of the resin due to excessive amount of sharing heat of the resin. In this case, it is preferable to send a notification to an operator by giving an alarm of some kind since it is necessary to change the molding conditions.

When there is too much sharing heat of the resin, a heat moves toward the outer side in the wall of the heating-cylinder 51, in the two temperature sensors arranged in a radial direction, the temperature detection value of the temperature sensor on the inner side (temperature sensor E-1 in FIG. 3) is higher than the temperature detection value of the temperature sensor on the outer side (temperature sensor E-2 in FIG. 3). Accordingly, if a difference between the temperature detection value by the temperature sensor on the inner side and the temperature detection value by the temperature sensor on the outer side is monitored, it is possible to determine whether or not the sharing heat is excessive.

As mentioned above, by controlling a power applied to each heater by detecting the temperature distribution in a radial direction in addition to the temperature distribution in the longitudinal direction of the heating-cylinder, the temperature of the heating-cylinder can be controlled with high accuracy, which enables accurate control of molding conditions.

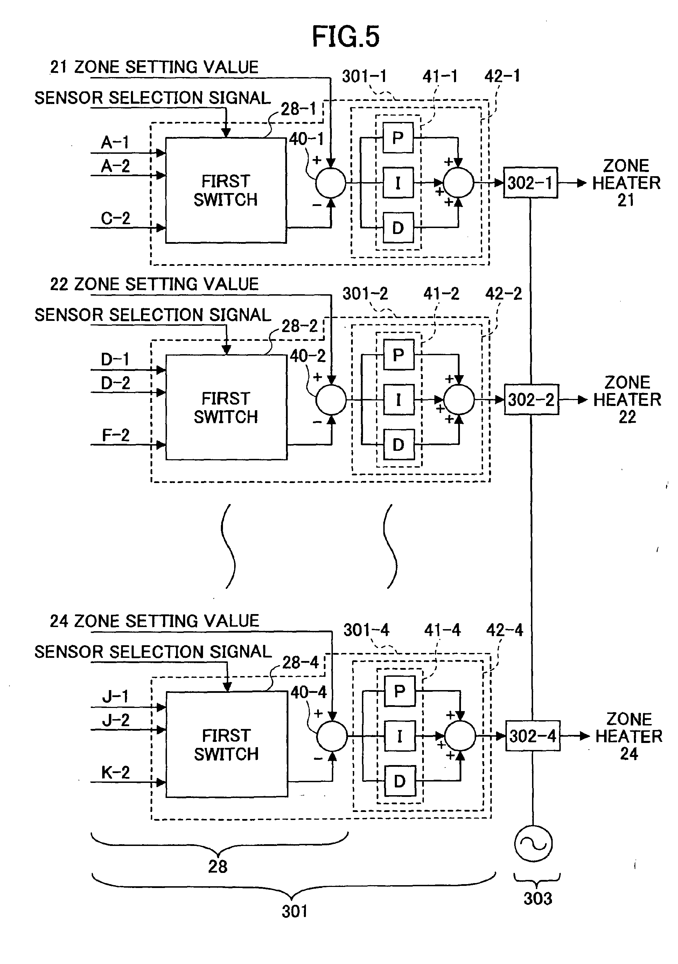

Next, the controller 30 shown in the FIG. 3 is explained more specifically with reference to FIG. 5. The controller 30 has the temperature control part 301 and the second switches 302-1 to 302-4, the temperature control part including the first switch part 28, which receives temperature measurement values from the temperature sensors A-1 to K-2 and selects the measured valued in accordance with sensor selection signals from the display input device 35. The temperature control units 301-1 to 301-4 constituting the temperature control part 301 correspond to the zones 21 to 24, respectively, and the first switches 28-1 to 28-4 constituting the first switch part 28 also correspond to the zones 21 to 24, respectively.

According to the above-mentioned relationship, the first switch 28-1 is given the measurement values from the temperature sensors A-1 to C-2 provided in the zone 21 together with the sensor selection signal and the temperature setting values of the zone 21. The first switch 28-2 is given the measurement values from the temperature sensors D-1 to F-2 provided in the zone 22 together with the sensor selection signal and the temperature setting values of the zone 22. Similarly, the first switches 28-3 and 23-4 are given the measurement values from the temperature sensors G-1 to I-2 and temperature sensors J-1 to K-2 together with the sensor selection signals and the temperature setting values, respectively. It should be noted that, in FIG. 5, the temperature control unit 301-3 and the second switch 302-3 relating to the zone 23 are omitted for the sake of simplification of the drawing.

According to the sensor selection signal, the first switches 28-1 to 28-4 select the temperature detection values of the temperature sensors A-1 to K-2, and outputs them to subtracters 40-1 to 40-4. The subtracters 40-1 to 40-4 computes differences between the setting values in the zones 21 to 24 given by the display input device 35 and the selected temperature detection values, and the computed differences are output to PID operation parts 42-1 to 42-4, respectively. The PID operation parts 42-1 to 42-4 include PID controllers 41-1 to 41-4, respectively, and supplies switching signals having on-duties corresponding to the input differences to the second switches 302-1 to 302-4 as zone selection signals, respectively. As a result, the second switches 302-1 to 302-4 corresponding to the zone selection signals are turned to an on state, and electric power is supplied to the heaters of the zones 21 to 24. As mentioned above, in the embodiment shown in FIG. 3, the heater of each zone is controlled by selecting the zones and the temperature sensors. Thereby, a fine temperature control can be performed based on a temperature distribution of the cylinder.

### INDUSTRIAL APPLICABILITY

As mentioned above, the present invention can appropriately control temperature of a heating-cylinder in accordance with zones, and is suitable for an injection molding machine to which accurate injection molding is required.

## Claims

1. An injection molding machine comprising:
a cylinder provided with a heater;
a plurality of temperature sensors provided at a plurality of positions of the cylinder to detect temperatures at the plurality of positions of said cylinder; and
a control device that controls an input to said heater by selectively using temperature detection values output from the temperature sensors.

2. The injection molding machine as claimed in claim 1, wherein said plurality of positions include tow or more different positions along a longitudinal direction of said cylinder.

3. The injection molding machine as claimed in claim 1, wherein said plurality of positions include two or more different positions inside a wall surface of said cylinder along a radial direction of said cylinder inside a wall surface of said cylinder.

4. The injection molding machine as claimed in claim 3, wherein said plurality of temperature sensors include a first temperature sensors provided at a position adjacent to an inner surface of said cylinder, and a second temperature sensor provided at a position closer to said heater than the first temperature sensor.

5. The injection molding machine as claimed in one of claims 1 to 4, wherein said cylinder is sectioned into a plurality of zones along said longitudinal direction, and said plurality of temperature sensors are provided to each of the plurality of zones.

6. The injection molding machine as claimed in one of claims 1 to 5, comprising a display/input device that displays temperature detection values of said plurality of temperature sensors and inputs temperatures to be set to each zone.

7. A temperature control method of an injection molding machine having a cylinder extending in a longitudinal direction and a heater provided to surround a periphery of the cylinder, comprising:
detecting temperatures of a plurality of positions of the cylinder;
selecting a temperature detection value used for controlling a temperature of said cylinder from temperature detection values detected at the plurality of positions; and
controlling the temperature of said cylinder by using the selected temperature detection value.

8. The temperature control method of an injection molding machine as claimed in claim 7, wherein said plurality of positions include tow or more different positions along a longitudinal direction of said cylinder.

9. The temperature control method of an injection molding machine as claimed in claim 7, wherein said plurality of positions include two or more different positions inside a wall surface of said cylinder along a radial direction of said cylinder.
